# EUROPEAN PATENT SPECIFICATION

(11) **EP 3 745 514 B1**
(45) Date of publication and mention of the grant of the patent: **09.04.2025**
(21) Application number: 18902856.6
(22) Date of filing: 31.08.2018
(51) Int. Cl.: H01M 8/04, H01M 8/0662, H01M 8/10, H01M 8/12, H01M 8/2475, H01M 8/2485

(54) **POWER GENERATION SYSTEM**
STROMERZEUGUNGSSYSTEM
SYSTÈME DE PRODUCTION D'ÉNERGIE

(30) Priority: 26.01.2018 JP 2018011260
(43) Date of publication of application: 02.12.2020
(73) Proprietor: Panasonic Intellectual Property Management Co., Ltd., Osaka-shi, Osaka 540-6207 (JP)
(72) Inventor: INOUE, Atsutaka, Osaka-shi, Osaka 540-6207 (JP); YAMAMOTO, Shinya, Osaka-shi, Osaka 540-6207 (JP); MORI, Yoshihiro, Osaka-shi, Osaka 540-6207 (JP); YOSHIDA, Hiroyasu, Osaka-shi, Osaka 540-6207 (JP); MIZUTANI, Yuta, Osaka-shi, Osaka 540-6207 (JP)
(74) Representative: Grünecker Patent- und Rechtsanwälte PartG mbB
(86) International application number: PCT/JP2018/032305
(87) International publication number: WO 2019/146146

(56) References cited:
- EP-A1- 2 963 725
- WO-A1-2012/153482
- JP-A- 2006 253 020
- JP-A- 2006 253 020
- JP-A- 2015 113 987

## Description

### TECHNICAL FIELD

The present disclosure relates to a power generation system.

### BACKGROUND ART

A conventional power generation system including a fuel cell is known to have a ventilated space inside a housing that accommodates the fuel cell. JP 2006253020 discloses a power generation system provided with a fuel cell unit, a housing and a ventilation passage.

A power generator described in PTL 1, for example, includes a fuel cell and an exhaust pipe. The exhaust pipe is connected to a duct. The duct extends vertically inside a building with an upper end of the duct being located outside the building. The fuel cell is housed in an exterior container. A ventilating pipe that provides air ventilation between the exterior container and the fuel cell is connected to the duct. The exterior container is preferably provided with a ventilation fan.

Described in PTL 2 is a fuel cell system that is disposed in a building. This fuel cell system includes a fuel processor, a fuel cell, and a ventilation fan inside a housing. The fuel cell system also includes a merging passage, a ventilation passage, and an exhaust passage.

The merging passage is connected to an external pipe. The ventilation passage is connected to a first junction of the merging passage. Ventilation gas from inside the housing is discharged out of the building by the ventilation fan through the ventilation passage, the merging passage, and the external pipe.

The ventilation passage is provided with a backflow preventer that prevents backflow of the ventilation gas. The exhaust passage is connected to a second junction of the merging passage that is located downstream of the first junction.

An unused oxidant gas of the fuel cell, and a combustion exhaust gas produced by a combustor of the fuel processor are discharged out of the building through the exhaust passage, the merging passage, and the external pipe.

Located between the first junction and the second junction of the merging passage is a passage heading upward from an upstream side to a downstream side for the ventilation gas. In addition, the ventilation passage includes, downstream of the backflow preventer, a passage that is of particular structure to suppress flow of liquids from a downstream end to an upstream end of the ventilation passage.

### Citation List

### Patent Literatures

PTL 1: Unexamined Japanese Patent Publication No. 2008-210631
PTL 2: Unexamined Japanese Patent Publication No. 2015-113987

### SUMMARY

The technique described in PTL 1 is not based on consideration of control of liquids that enter the ventilating pipe, such as condensed water and rainwater. According to the technique described in PTL 2, because of having the particular structure, the ventilation passage suppresses flow of the liquids from its downstream end to its upstream end.

However, the ventilation passage having the particular structure is hardly desirable from a viewpoint of decreasing flow path resistance of the ventilation passage. Accordingly, the present disclosure provides a power generation system that can prevent liquids from entering a ventilator even when a ventilation passage does not have a particular structure.

A power generation system according to the present invention includes a fuel cell unit, a housing, a ventilator, a ventilation passage, and a discharge passage, as defined in claim 1.

The fuel cell unit includes a fuel cell. The housing accommodates the fuel cell unit. The ventilator is disposed in the housing to blow air out of the housing. The ventilation passage is disposed in the housing and allows passage of the air blown by the ventilator and an exhaust gas discharged from the fuel cell unit.

The discharge passage is disposed outside the housing, connects with the ventilation passage and lets the air and the exhaust gas that have passed through the ventilation passage into an atmosphere. An air outlet of the ventilator is located at a higher level than a bottom face of the ventilation passage that is contiguous with the air outlet.

The power generation system according to the present disclosure can prevent liquids from entering the ventilator even when the ventilation passage does not have a particular structure.

### BRIEF DESCRIPTION OF THE DRAWINGS

FIG. 1 is a configuration diagram illustrating a power generation system which is an example according to the present disclosure.
FIG. 2 is a side view illustrating a ventilator and a hollow component that includes a ventilation passage in the power generation system illustrated in FIG. 1.
FIG. 3A is a top view of the hollow component illustrated in FIG. 2.
FIG. 3B is a top view of a hollow component which is another example.
FIG. 4 is a sectional view of the hollow component illustrated in FIG. 2, the section being taken along line 4-4.
FIG. 5 is a configuration diagram illustrating a power generation system which is another example according to the present disclosure.

### DESCRIPTION OF EMBODIMENT

In a power generation system including a fuel cell unit, causing air blown by a ventilator and an exhaust gas of the fuel cell unit to merge before being discharged into an atmosphere is conceivable when the ventilator is used to ventilate an interior of a housing.

The exhaust gas includes water vapor, so that when the exhaust gas is cooled, condensed water is generated. If, for example, the condensed water enters the ventilator, there is a possibility that durability of the ventilator will be affected. It is therefore desirable that liquids including the condensed water should not flow upstream along a ventilation passage that the air blown by the ventilator passes through.

In the meantime, a ventilation passage having a particular structure is hardly desirable from a viewpoint of decreasing flow path resistance of the ventilation passage. There is a need for a technique that can prevent the liquids from entering the ventilator even when the ventilation passage does not have a particular structure.

After intensive studies, the present inventors have devised a power generation system that according to the present disclosure, can prevent the liquids from entering a ventilator even when a ventilation passage does not have a particular structure.

A power generation system according to a first aspect of the present disclosure includes a fuel cell unit, a housing, a ventilator, a ventilation passage, and a discharge passage.

The fuel cell unit includes a fuel cell. The housing accommodates the fuel cell unit. The ventilator is disposed in the housing to blow air out of the housing. The ventilation passage is disposed in the housing and allows passage of the air blown by the ventilator and an exhaust gas discharged from the fuel cell unit.

The discharge passage is disposed outside the housing, connects with the ventilation passage and lets the air and the exhaust gas that have passed through the ventilation passage into an atmosphere. An air outlet of the ventilator is located at a higher level than a bottom face of the ventilation passage that is contiguous with the air outlet.

According to this aspect, the liquids can be prevented from entering the ventilator even when the ventilation passage does not have a particular structure. Therefore, the power generation system can have increased durability.

While being based on the first aspect, a power generation system according to a second aspect of the present disclosure is as follows. The ventilation passage includes a projection. The projection projects inward from a wall surface that defines the bottom face or a side face of the ventilation passage around the projection. The air outlet is located at a leading end of the projection. According to this aspect, even when the liquids flow along the wall surface surrounding the projection, the liquids can be prevented from entering the ventilator.

While being based on the first aspect, a power generation system according to a third aspect of the present disclosure is such that the air outlet is an upwardly facing opening. According to this aspect, even though the air outlet of the ventilator is the upwardly facing opening, the liquids can be prevented from entering the ventilator.

While being based on the first aspect, a power generation system according to a fourth aspect of the present disclosure is such that the air outlet is horizontally separated from a boundary between the ventilation passage and the discharge passage. According to this aspect, even when the liquids including rainwater drop passing the boundary between the ventilation passage and the discharge passage, these liquids do not enter through the air outlet. Therefore, more reliable prevention of entry of the liquids into the ventilator can be achieved.

While being based on the first aspect, a power generation system according to a fifth aspect of the present disclosure is as follows. The ventilation passage includes a horizontal passage that the air flows horizontally through. The horizontal passage has a cross section with a longer horizontal length. According to this aspect, the horizontal passage can have a decreased height while having an increased cross-sectional area. Thus increase in flow path resistance of the ventilation passage can be suppressed, and another achievement is that the ventilation passage occupies a reduced vertical space in the housing.

While being based on the first aspect, a power generation system according to a sixth aspect of the present disclosure is as follows. The ventilation passage includes a merging portion where the exhaust gas and the air merge. The merging portion is located downstream of the air outlet in a flowing direction of the air.

According to this aspect, the exhaust gas merges at the portion downstream of the air outlet in the flowing direction of the air. Therefore, the exhaust gas including water vapor does not easily pass by the air outlet. Even when the water vapor included in the exhaust gas condenses into water, this liquid can consequently be prevented without fail from entering the ventilator.

While being based on the sixth aspect, a power generation system according to a seventh aspect of the present disclosure is as follows. The ventilation passage includes a horizontal passage that the air flows horizontally through. The horizontal passage includes the merging portion. This aspect enables the horizontally flowing air and the flowing exhaust gas to merge at right angles. Therefore, the exhaust gas is easily diluted with the air. The power generation system thus can have increased safety.

While being based on the seventh aspect, a power generation system according to an eighth aspect of the present disclosure is such that a ceiling of the ventilation passage includes a first segment located above the air outlet, a second segment neighboring the merging portion, and a third segment sloping down between the first segment and the second segment in a direction from the first segment to the second segment.

According to this aspect, even when the ceiling of the ventilation passage has the condensed water as a result of merging of the exhaust gas and the air, the condensed water does not easily come close to the air outlet along the ceiling of the ventilation passage. Accordingly, more reliable prevention of entry of the liquid into the ventilator can be achieved.

While being based on the sixth aspect, a power generation system according to a ninth aspect of the present disclosure also includes a drain outlet in the bottom face of the ventilation passage or in a wall surface connecting with the bottom face. The drain outlet is located at a lower level than the merging portion and a boundary between the ventilation passage and the discharge passage.

The ventilation passage includes a horizontal passage that the air flows horizontally through, and the air outlet is located between the merging portion and the drain outlet in a direction perpendicular to a cross section of the horizontal passage.

According to this aspect, the liquids including the condensed water pass by the air outlet along the bottom face of the ventilation passage, thus being led to the drain outlet. Although the liquids flow upstream along the ventilation passage, the liquids can be prevented thus from entering the ventilator.

While being based on the sixth aspect, a power generation system according to a tenth aspect of the present disclosure is such that the ventilation passage has, at the merging portion, a cross-sectional area that is larger than or equal to an opening area of the air outlet. This aspect provides easy suppression of increase in flow path resistance of the ventilation passage that might be caused by merging of the exhaust gas and the air.

While being based on the first aspect, a power generation system according to an eleventh aspect of the present disclosure is such that the ventilator includes a backflow preventer adjacent to the air outlet. According to this aspect, even when, for example, the exhaust gas flows upstream along the ventilation passage, the backflow preventer can prevent the exhaust gas from entering the ventilator. Therefore, the power generation system can have increased durability.

While being based on the first aspect, a power generation system according to a twelfth aspect of the present disclosure is such that the fuel cell unit also includes a fuel processor that produces a fuel gas to be supplied to the fuel cell. According to this aspect, the fuel gas that is to be supplied to the fuel cell can be produced by the fuel processor.

With reference to the drawings, a description is hereinafter provided of an exemplary embodiment of the present disclosure. The present disclosure is not limited to the following exemplary embodiment.

In each of the accompanying drawings, an xy plane is horizontal, and a positive z-axis direction is vertically upward. An x-axis and a y-axis are perpendicular to each other.

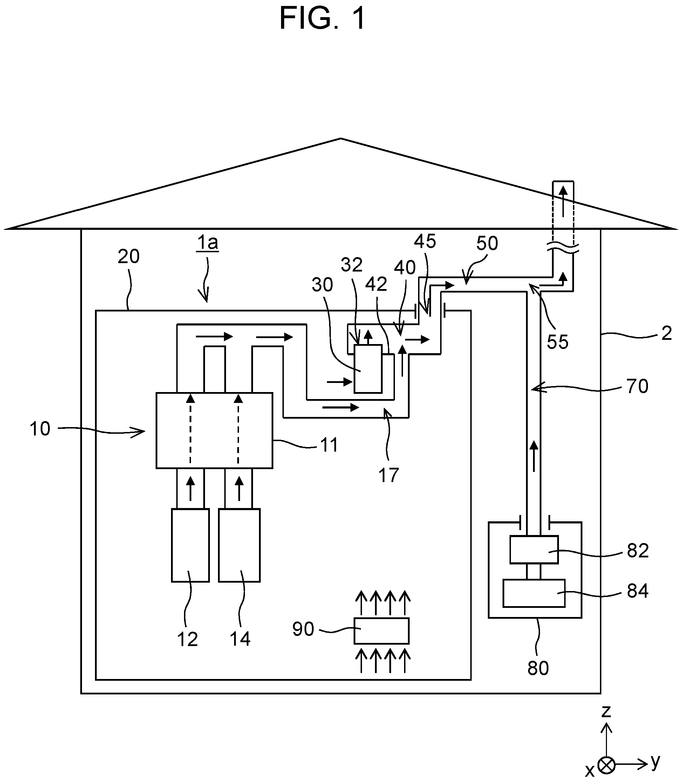

As illustrated in FIG. 1, power generation system 1a includes fuel cell unit 10, housing 20, ventilator 30, ventilation passage 40, and discharge passage 50. Fuel cell unit 10 includes fuel cell 11. Housing 20 accommodates fuel cell unit 10. Ventilator 30 is disposed in housing 20 to blow air out of housing 20. Ventilation passage 40 is disposed in housing 20.

The air blown by ventilator 30, and an exhaust gas discharged from fuel cell unit 10 pass through ventilation passage 40. Discharge passage 50 is disposed outside housing 20 and connects with ventilation passage 40. Discharge passage 50 lets the air and the exhaust gas that have passed through ventilation passage 40 into an atmosphere.

Air outlet 32 of ventilator 30 is located at a higher level than bottom face 42 of ventilation passage 40 that is contiguous with air outlet 32. The exhaust gas of fuel cell unit 10 can include water vapor, and there is a possibility that the water vapor condenses to form condensed water. Because of the above configuration, the condensed water can be prevented from entering ventilator 30 along bottom face 42 of ventilation passage 40. Power generation system 1a thus can have increased durability.

Ventilator 30 may be of any structure provided that ventilator 30 can suck in air from inside housing 20 to blow the air from air outlet 32. Ventilator 30 includes, for example, a fan such as a propeller fan, a sirocco fan, or a turbo fan.

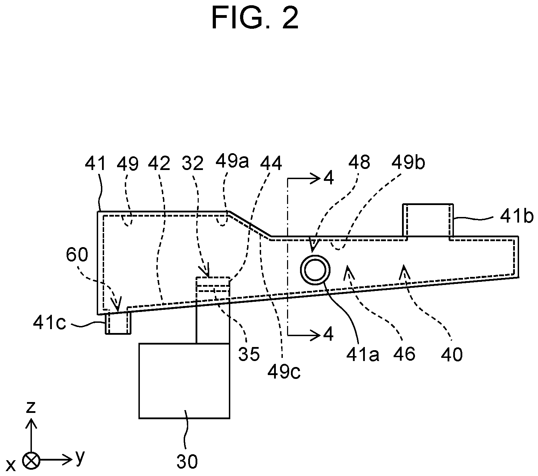

Ventilation passage 40 is defined, for example, by an interior space of hollow component 41 illustrated in FIGS. 2 to 4. Hollow component 41 is made of, for example, a synthetic resin such as polypropylene. This makes it easy to form lightweight hollow component 41 of a desired shape.

As illustrated in FIG. 2, ventilation passage 40 includes projection 44. Projection 44 projects inward from a wall surface that defines bottom face 42 around projection 44. Air outlet 32 is located at a leading end of projection 44. Therefore, liquids including the condensed water are prevented from entering ventilator 30 even when the liquids flow along the wall surface surrounding projection 44. Projection 44 may project inward from a wall surface that defines a side face of ventilation passage 40 around projection 44.

As illustrated in FIGS. 1 to 3A, air outlet 32 is horizontally separated from boundary 45 between ventilation passage 40 and discharge passage 50. Even when the liquids including rainwater pass boundary 45, the liquids can be more reliably prevented in this case from entering ventilator 30 through air outlet 32.

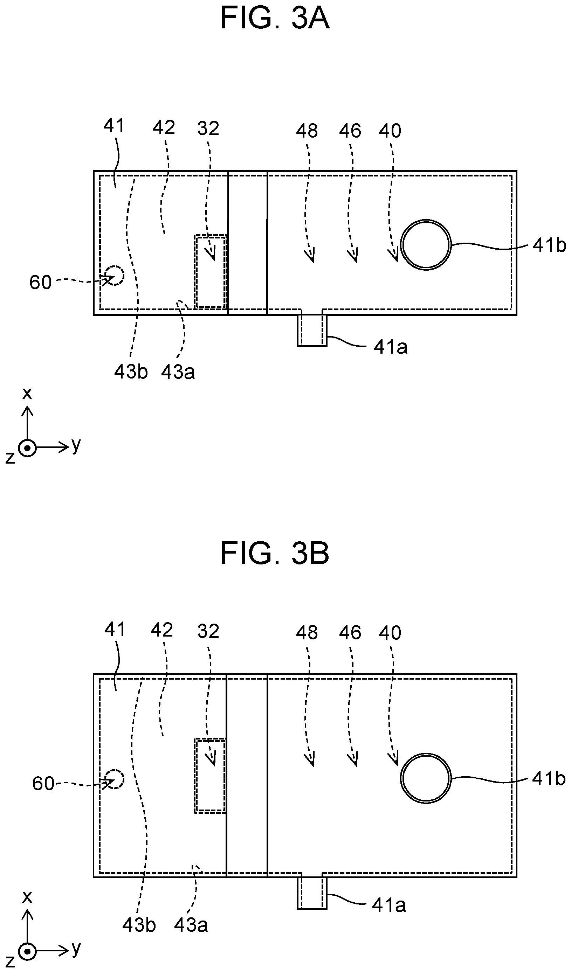

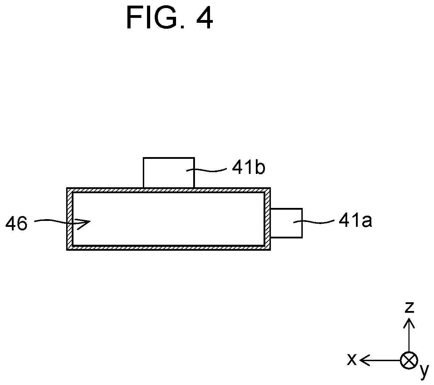

As illustrated in FIGS. 2 and 3A, ventilation passage 40 includes horizontal passage 46. The air blown by ventilator 30 flows horizontally through horizontal passage 46. As FIG. 4 illustrates, horizontal passage 46 has a cross section with a longer horizontal length. The cross-section of horizontal passage 46 refers to a section orthogonal to a flowing direction of the air in horizontal passage 46. With its cross section having the longer horizontal length, horizontal passage 46 can have a decreased height while having an increased cross-sectional area.

First side face 43a and second side face 43b extend along the direction (a positive y-axis direction) that the air flows through horizontal passage 46. As FIG. 3A illustrates, it is first side face 43a that is contiguous with air outlet 32. Thus hollow component 41 can have a decreased x-axis dimension with air outlet 32 keeping a large opening area. As illustrated in FIG. 3B, air outlet 32 may be separated from first side face 43a as well as from second side face 43b in hollow component 41.

As FIGS. 2 and 3A illustrate, ventilation passage 40 includes merging portion 48. At merging portion 48, the exhaust gas discharged from fuel cell unit 10 merges with the air blown by ventilator 30. Merging portion 48 is located downstream of air outlet 32 in the flowing direction of the air blown by ventilator 30. In this case, the exhaust gas merges at the portion downstream of air outlet 32 in the flowing direction of the air. Therefore, the exhaust gas that includes the water vapor does not easily pass by air outlet 32. In this way, the water that results from the condensation of the water vapor included in the exhaust gas can be prevented from entering ventilator 30.

As illustrated in FIGS. 2 and 3A, merging portion 48 is included in horizontal passage 46. In this case, the horizontally flowing air and the flowing exhaust gas merge at right angles, so that the exhaust gas is easily diluted with the air.

The exhaust gas is guided to merging portion 48 from a direction different from the direction (positive y-axis direction) that the air flows through horizontal passage 46. Preferably, the exhaust gas is guided to merging portion 48 perpendicularly to the direction that the air flows through horizontal passage 46. Thus the exhaust gas is reliably diluted with the air. As illustrated in FIGS. 2 and 3A, hollow component 41 includes first protrusion 41a that is tubular. First protrusion 41a is formed at the side face 43a of hollow component 41 to protrude outward from its surrounding wall surface. When guided to merging portion 48, the exhaust gas passes through first protrusion 41a.

Ventilation passage 40 has, at merging portion 48, a cross-sectional area that is larger than or equal to the opening area of air outlet 32. This provides easy suppression of increase in flow path resistance of ventilation passage 40 that might be caused by merging of the exhaust gas and the air.

As FIGS. 2 and 3A illustrate, hollow component 41 includes second protrusion 41b that is, for example, tubular. Second protrusion 41b is formed at a top of hollow component 41 to protrude outward from its surrounding wall surface. Included in ventilation passage 40, an interior space of second protrusion 41b is located downstream of merging portion 48 in the flowing direction of the air. A leading edge of second protrusion 41b defines boundary 45. After merging at merging portion 48, the air and the exhaust gas pass through second protrusion 41b to enter discharge passage 50. Second protrusion 41b is disposed in a through hole formed in a top plate of housing 20. Connected to second protrusion 41b is a pipe including discharge passage 50.

As illustrated in FIG. 2, ceiling 49 of ventilation passage 40 includes first segment 49a, second segment 49b, and third segment 49c. First segment 49a is located above air outlet 32. Second segment 49b neighbors merging portion 48. Third segment 49c slopes down between first segment 49a and second segment 49b in a direction from first segment 49a to second segment 49b.

There is a possibility that the water vapor included in the exhaust gas condenses on second segment 49b into the water when the exhaust gas and the air merge. Because third segment 49c of ceiling 49 slopes down in the direction from first segment 49a to second segment 49b, the condensed water on second segment 49a is kept away from first segment 49 that is located above air outlet 32. Accordingly, more reliable prevention of entry of the liquids, which include the condensed water, into ventilator 30 can be achieved. Third segment 49c may make right angles with the flowing direction of the air.

As FIGS. 2, 3A, and 3B illustrate, power generation system 1a also includes drain outlet 60. Drain outlet 60 is formed in the bottom face 42 of ventilation passage 40 or in any wall surface connecting with the bottom face 42 and is located at a lower level than merging portion 48 and boundary 45 between ventilation passage 40 and discharge passage 50. Air outlet 32 is located between merging portion 48 and drain outlet 60 in a direction perpendicular to the cross section of horizontal passage 46.

Therefore, the water that is formed by condensation of the water vapor included in the exhaust gas when the exhaust gas and the air merge, or water or the like that has passed boundary 45 passes by air outlet 32 along bottom face 42 of ventilation passage 40, thus being led to drain outlet 60.

Although the liquids pass by air outlet 32, the liquid can be prevented thus from entering ventilator 30. Hollow component 41 includes third protrusion 41c that is tubular. Drain outlet 60 is located at a base of third protrusion 41c. Third protrusion 41c is formed at a bottom of hollow component 41 to protrude outward from its surrounding wall surface.

As illustrated in FIG. 2, bottom face 42 of ventilation passage 40 slopes down toward drain outlet 60. Thus the liquids including the condensed water are led to drain outlet 60 along bottom face 42 of ventilation passage 40.

Inside housing 20, a tank (not illustrated) is disposed below drain outlet 60. Drain outlet 60 is connected to this tank via a pipe. A pipe including a drain passage is connected to the tank and extends out of housing 20. After passing through drain outlet 60, the liquids including the condensed water are stored in the tank and are subsequently led out of housing 20 through the drain passage.

As illustrated in FIG. 2, ventilator 30 includes backflow preventer 35. Backflow preventer 35 is disposed adjacent to air outlet 32. Backflow preventer 35 is, for example, a swing check valve, a lift check valve, or a disc check valve.

Even when the exhaust gas flows upstream along ventilation passage 40, backflow preventer 35 can prevent the exhaust gas from entering ventilator 30. Therefore, power generation system 1a can have increased durability.

As FIG. 1 illustrates, power generation system 1a is installed in building 2. Discharge passage 50 extends out of building 2. Discharge passage 50 is defined by an interior space of the specified pipe. An inner space of a double walled pipe that extends out of building 2 defines a part of discharge passage 50. In this case, air from inside building 2 is supplied into power generation system 1a through an outer space of the double walled pipe. Discharge passage 50 may be defined by an interior space of a pipe other than the double walled pipe. The double walled pipe may be such that air from outside building 2 is supplied into power generation system 1a through the outer space of the double walled pipe.

Power generation system 1a also includes fuel gas supply unit 12 and oxidant gas supply unit 14. Fuel gas supply unit 12 supplies a fuel gas from a fuel gas supply source (not illustrated) to an anode of fuel cell 11. The fuel gas includes a hydrogen gas. Oxidant gas supply unit 14 supplies an oxidant gas, such as air including oxygen, to a cathode of fuel cell 11. Fuel gas supply unit 12 is a pump, and oxidant gas supply unit 14 is a blower.

In fuel cell 11, the fuel gas supplied to the anode and the oxidant gas supplied to the cathode react, whereby electricity and heat are produced. The electricity produced by fuel cell 11 is supplied to an electric power load external to housing 20. The heat produced by fuel cell 11 is recovered by a heat medium such as cooling water and is used, for example, to heat water. Fuel cell 11 is, for example, a solid polymer fuel cell or a solid oxide fuel cell.

The exhaust gas discharged from fuel cell unit 10 includes, for example, an anode off-gas and a cathode off-gas. The anode off-gas includes an unreacted fuel gas and is discharged from the anode of fuel cell 11. The cathode off-gas includes an unreacted oxidant gas and is discharged from the cathode of fuel cell 11.

Power generation system 1a also includes passage 17. Passage 17 connects an anode off-gas outlet of the anode of fuel cell 11 and a cathode off-gas outlet of the cathode of fuel cell 11 with ventilation passage 40.

An interior space of first protrusion 41a defines an end of passage 17. The anode off-gas and the cathode off-gas pass through passage 17, thus being guided to ventilation passage 40. The water vapor is produced by reaction between the fuel gas and the oxidant gas at fuel cell 11. It is for this reason that the gaseous water vapor is also included in the exhaust gas.

Power generation system 1a also includes combustion device 80. Combustion device 80 includes combustor 82 and air supply unit 84. Supplied to combustor 82 are a specified fuel and air which is supplied by air supply unit 84. Accordingly, combustor 82 combusts the fuel to produce heat and a combustion exhaust gas. The heat produced is used, for example, to heat water. In other words, combustion device 80 is used, for example, as a boiler.

The fuel that is supplied to combustor 82 is, for example, an inflammable gas such as natural gas, or a liquid fuel such as kerosene. Air supply unit 84 is, for example, a fan or a blower.

Combustion device 80 also includes exhaust gas passage 70. Exhaust gas passage 70 connects discharge passage 50 and a combustion exhaust gas outlet of combustor 82. Inside building 2, discharge passage 50 includes merging portion 55. Merging portion 55 is where the air and the exhaust gas that are discharged out of housing 20 merge with the combustion exhaust gas discharged from combustor 82. These gases pass through discharge passage 50, thus being discharged into the atmosphere.

As stated above, ventilator 30 includes backflow preventer 35. Therefore, even when the combustion exhaust gas produced by combustor 82 flows upstream along ventilation passage 40, the combustion exhaust gas can be prevented from entering ventilator 30. Consequently, power generation system 1a can have increased durability.

Power generation system 1a also includes controller 90. Controller 90 is, for example, a digital computer storing an executable program that operates power generation system 1a. Controller 90 obtains information indicative of results measured by measuring devices that are included in power generation system 1a, such as a temperature sensor and a flowmeter. Moreover, controller 90 transmits control signals to fuel gas supply unit 12, oxidant gas supply unit 14, ventilator 30, the fan, the blower, a pump, a heater, the valve, or the like.

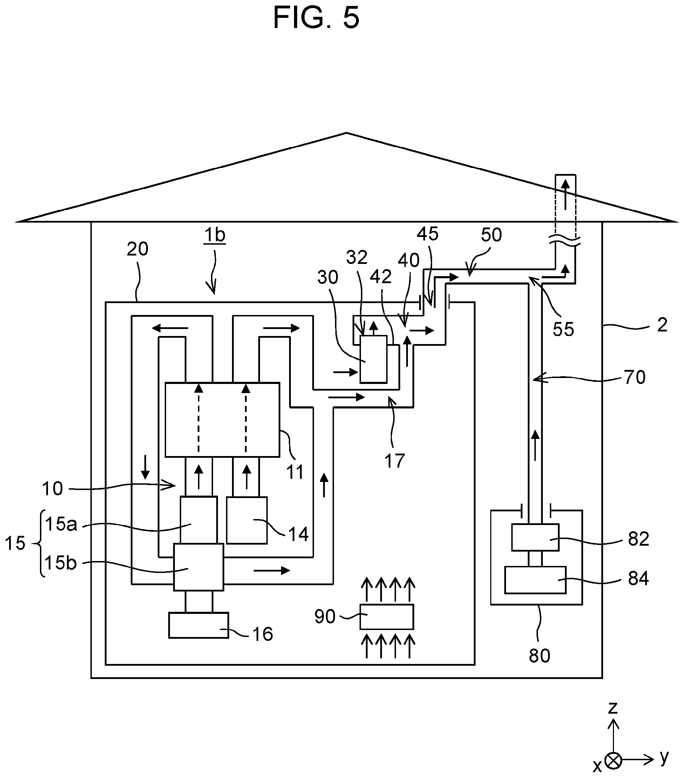

Power generation system 1a can be modified in various respects. For example, power generation system 1a may be replaced with power generation system 1b illustrated in FIG. 5.

Those constituent elements of FIG. 5 power generation system 1b that are identical or correspond to the constituent elements of FIG. 1 power generation system 1a have the same reference marks and are not described in detail.

As illustrated in FIG. 5, fuel cell unit 10 of power generation system 1b includes fuel processor 15. Fuel processor 15 produces a fuel gas that is to be supplied to fuel cell 11.

Fuel processor 15 includes reformer 15a and combustor 15b. Reformer 15a produces hydrogen by reforming reaction such as steam reforming reaction (CH4 + H2O -> CO + 3H₂). A reforming catalyst is housed in reformer 15a for the purpose of promoting the reforming reaction. Also housed in reformer 15a are catalysts that remove carbon monoxide (CO).

The catalysts that remove carbon monoxide include a CO shifting catalyst and a CO selective oxidation removal catalyst. A source gas to be supplied to reformer 15a is, for example, a hydrocarbon gas such as city gas or liquefied petroleum (LP) gas. Including hydrogen produced by reformer 15a, the fuel gas is supplied to fuel cell 11.

Combustor 15b is connected to an anode off-gas outlet of fuel cell 11. An anode off-gas is supplied to combustor 15b as a gas to be used for combustion. Power generation system 1b includes air supply unit 16 that supplies air to combustor 15b. Air supply unit 16 is, for example, a pump or a blower.

Combustor 15b combusts the anode off-gas and the air, thus producing heat and a combustion exhaust gas. Because of the heat produced by combustor 15b, reformer 15a is heated, and the reforming reaction is promoted accordingly.

Passage 17 is connected to a combustion exhaust gas outlet of combustor 15b. Therefore, the combustion exhaust gas produced by combustor 15b passes through passage 17 and is guided to ventilation passage 40 together with a cathode off-gas, thus being included in an exhaust gas. Not only the anode off-gas but also the cathode off-gas may be supplied to combustor 15b.

### INDUSTRIAL APPLICABILITY

A power generation system according to the present disclosure is applicable to the field of fuel cells.

### REFERENCE MARKS IN THE DRAWINGS

1a, 1b: power generation system
2: building
10: fuel cell unit
11: fuel cell
12: fuel gas supply unit
14: oxidant gas supply unit
15: fuel processor
15a: reformer
15b, 82: combustor
16, 84: air supply unit
17: passage
20: housing
30: ventilator
32: air outlet
35: backflow preventer
40: ventilation passage
41: hollow component
41a: first protrusion
41b: second protrusion
41c: third protrusion
42: bottom face
43a: first side face
43b: second side face
44: projection
45: boundary
46: horizontal passage
48, 55: merging portion
49: ceiling
49a: first segment
49b: second segment
49c: third segment
50: discharge passage
60: drain outlet
70: exhaust gas passage
80: combustion device
90: controller

## Claims

1. A power generation system comprising:
a fuel cell unit (10) including a fuel cell (11);
a housing (20) accommodating the fuel cell unit (10);
a ventilator (30) disposed in the housing (20) and blowing air out of the housing (20);
a ventilation passage (40) disposed in the housing (20), the ventilation passage (40) allowing passage of the air blown by the ventilator (30) and an exhaust gas discharged from the fuel cell unit (10); and
a discharge passage (50) that lets the air and the exhaust gas that have passed through the ventilation passage (40) into an atmosphere, the discharge passage (50) being disposed outside the housing (20) and connecting with the ventilation passage (40),
wherein an air outlet (32) of the ventilator (30) is located at a higher level than a bottom face (42) of the ventilation passage (40) that is contiguous with the air outlet (32),
**characterized in that:**
the ventilation passage (40) includes a projection (44), the projection (44) projecting inward from a wall surface that defines one of the bottom face (42) and a side face (43a, 43b) of the ventilation passage (40) around the projection (44);
a drain outlet (60) in one of the bottom face (42) of the ventilation passage (40) and a wall surface connecting with the bottom face (42), the drain outlet (60) being located at a lower level than a merging portion (48) where the exhaust gas and the air merge and a boundary (45) between the ventilation passage (40) and the discharge passage (50);
the bottom face (42) of the ventilation passage (40) slopes down toward the drain outlet (60); and
the air outlet (32) is located at a leading end of the projection (44).

2. The power generation system according to claim 1, wherein the air outlet (32) is an upwardly facing opening.

3. The power generation system according to claim 1, wherein the air outlet (32) is horizontally separated from a boundary between the ventilation passage (40) and the discharge passage (50).

4. The power generation system according to claim 1, wherein:
the ventilation passage (40) includes a horizontal passage (46) that the air flows horizontally through; and
the horizontal passage (46) has a cross section with a longer horizontal length.

5. The power generation system according to claim 1, wherein:
the ventilation passage (40) includes a merging portion (48, 55) where the exhaust gas and the air merge; and
the merging portion (48, 55) is located downstream of the air outlet (32) in a flowing direction of the air.

6. The power generation system according to claim 5, wherein:
the ventilation passage (40) includes a horizontal passage (46) that the air flows horizontally through; and
the horizontal passage (46) includes the merging portion (48, 55).

7. The power generation system according to claim 6, wherein a ceiling (49) of the ventilation passage (40) includes:
a first segment (49a) located above the air outlet (32);
a second segment (49b) neighboring the merging portion (48, 55); and
a third segment (49c) sloping down between the first segment (49a) and the second segment (49b) in a direction from the first segment (49a) to the second segment (49b).

8. The power generation system according to claim 5, wherein
the ventilation passage (40) includes a horizontal passage (46) that the air flows horizontally through, and
the air outlet (32) is located between the merging portion (48, 55) and the drain outlet (60) in a direction perpendicular to a cross section of the horizontal passage (46).

9. The power generation system according to claim 5, wherein the ventilation passage (40) has, at the merging portion (48, 55), a cross-sectional area that is larger than or equal to an opening area of the air outlet (32).

10. The power generation system according to claim 1, wherein the ventilator (30) includes a backflow preventer (35) adjacent to the air outlet (32).

11. The power generation system according to claim 1, wherein the fuel cell unit (10) further includes a fuel processor (15) that produces a fuel gas to be supplied to the fuel cell (11).

## Patentansprüche

1. Stromerzeugungs-System, das umfasst:
eine Brennstoffzellen-Einheit (10), die eine Brennstoffzelle (11) enthält;
ein Gehäuse (20), das die Brennstoffzellen-Einheit (10) aufnimmt;
einen Lüfter (30), der in dem Gehäuse (20) angeordnet ist und Luft aus dem Gehäuse (20) heraus bläst;
einen Lüftungskanal (40), der in dem Gehäuse (20) angeordnet ist, wobei der Lüftungskanal (40) Durchgang der von dem Lüfter (30) geblasenen Luft sowie eines aus der Brennstoffzellen-Einheit (10) abgeleiteten Abgases ermöglicht; und
einen Ableitkanal (50), der die Luft und das Abgas, die durch den Lüftungskanal (40) gelangt sind, in eine Atmosphäre ablässt, wobei der Ableitkanal (50) außerhalb des Gehäuses (20) angeordnet und mit dem Lüftungskanal (40) verbunden ist,
wobei ein Luftauslass (32) des Lüfters (30) höher liegt als eine Bodenfläche (42) des Lüftungskanals (40), die an den Luftauslass (32) angrenzt,
**dadurch gekennzeichnet, dass**
der Lüftungskanal (40) einen Vorsprung (44) enthält, wobei der Vorsprung (44) von einer Wandfläche, die die Bodenfläche (42) oder eine Seitenfläche (43a, 43b) des Lüftungskanals (40) um den Vorsprung (44) herum bildet, nach innen vorsteht;
einen Ablauf-Auslass (60) in der Bodenfläche (42) des Lüftungskanals (40) oder einer Wandfläche, die mit der Bodenfläche (42) verbunden ist, wobei der Ablauf-Auslass (60) tiefer liegt als ein Vermischungsabschnitt (48), in dem sich das Abgas und die Luft vermischen, und eine Grenze (45) zwischen dem Lüftungskanal (40) und dem Ableitkanal (50),
die Bodenfläche (42) des Lüftungskanals (40) zu dem Ablauf-Auslass (60) hin nach unten abfällt; und
sich der Luftauslass (32) an einem vorderen Ende des Vorsprungs (44) befindet.

2. Stromerzeugungs-System nach Anspruch 1, wobei der Luftauslass (32) eine nach oben gewandte Öffnung ist.

3. Stromerzeugungs-System nach Anspruch 1, wobei der Luftauslass (32) horizontal von einer Grenze zwischen dem Lüftungskanal (40) und dem Ableitkanal (50) getrennt ist.

4. Stromerzeugungs-System nach Anspruch 1, wobei:
der Lüftungskanal (40) einen horizontalen Durchlass (46) enthält, den die Luft horizontal durchströmt; und
der horizontale Durchlass (46) einen Querschnitt mit einer größeren horizontalen Länge hat.

5. Stromerzeugungs-System nach Anspruch 1, wobei:
der Lüftungskanal (40) einen Vermischungsabschnitt (48, 55) enthält, in dem sich das Abgas und die Luft vermischen; und
sich der Vermischungsabschnitt (48, 55) in einer Strömungsrichtung der Luft stromab von dem Luftauslass (32) befindet.

6. Stromerzeugungs-System nach Anspruch 5, wobei:
der Lüftungskanal (40) einen horizontalen Durchlass (46) enthält, den die Luft horizontal durchströmt; und
der horizontale Durchlass (46) den Vermischungsabschnitt (48, 55) einschließt.

7. Stromerzeugungs-System nach Anspruch 6, wobei eine Oberwand (49) des Lüftungskanals (40) enthält:
ein erstes Segment (49a), das sich oberhalb des Luftauslasses (32) befindet;
ein zweites Segment (49b), das an den Vermischungsabschnitt (48, 55) angrenzt; sowie ein drittes Segment (49c), das zwischen dem ersten Segment (49a) und dem zweiten Segment (49b) in einer Richtung von dem ersten Segment (49a) zu dem zweiten Segment (49b) nach unten abfällt.

8. Stromerzeugungs-System nach Anspruch 5, wobei
der Lüftungskanal (40) einen horizontalen Durchlass (46) enthält, den die Luft horizontal durchströmt; und
sich der Luftauslass (32) in einer Richtung senkrecht zu einem Querschnitt des horizontalen Durchlasses (46) zwischen dem Vermischungsabschnitt (48, 55) und dem Ablauf-Auslass (60) befindet.

9. Stromerzeugungs-System nach Anspruch 5, wobei der Lüftungskanal (40) an dem Vermischungsabschnitt (48, 55) eine Querschnittsfläche hat, die größer ist als oder genauso groß wie eine Öffnungsfläche des Luftauslasses (32).

10. Stromerzeugungs-System nach Anspruch 1, wobei der Lüfter (30) einen Rückflussverhinderer (35) an den Luftauslass (32) angrenzend enthält.

11. Stromerzeugungs-System nach Anspruch 1, wobei die Brennstoffzellen-Einheit (10) des Weiteren eine Brennstoff-Verarbeitungseinrichtung (15) enthält, die ein der Brennstoffzelle (11) zuzuführendes Brennstoff-Gas erzeugt.

## Revendications

1. Système de génération d'énergie comprenant :
une unité de pile à combustible (10) comportant une pile à combustible (11) ;
un boîtier (20) logeant l'unité de pile à combustible (10) ;
un ventilateur (30) disposé dans le boîtier (20) et soufflant de l'air hors du boîtier (20) ;
un passage de ventilation (40) disposé dans le boîtier (20), le passage de ventilation (40) permettant le passage de l'air soufflé par le ventilateur (30) et d'un gaz d'échappement évacué de l'unité de pile à combustible (10) ; et
un passage d'évacuation (50) qui lâche l'air et le gaz d'échappement qui ont traversé le passage de ventilation (40) dans une atmosphère, le passage d'évacuation (50) étant disposé à l'extérieur du boîtier (20) et se raccordant au passage de ventilation (40),
dans lequel une sortie d'air (32) du ventilateur (30) est située à un niveau plus élevé qu'une face inférieure (42) du passage de ventilation (40) qui est contiguë à la sortie d'air (32),
**caractérisé en ce que :**
le passage de ventilation (40) comporte une saillie (44), la saillie (44) faisant saillie vers l'intérieur à partir d'une surface de paroi qui définit l'une de la face inférieure (42) et d'une face latérale (43a, 43b) du passage de ventilation (40) autour de la saillie (44) ;
une sortie de drainage (60) dans l'une de la face inférieure (42) du passage de ventilation (40) et d'une surface de paroi se raccordant à la face inférieure (42), la sortie de drainage (60) étant située à un niveau plus bas qu'une partie de fusion (48), où le gaz d'échappement et l'air fusionnent, et qu'une limite (45) entre le passage de ventilation (40) et le passage d'évacuation (50) ;
la face inférieure (42) du passage de ventilation (40) est inclinée vers le bas en direction de la sortie de drainage (60) ; et
la sortie d'air (32) est située au niveau d'une extrémité avant de la saillie (44).

2. Système de génération d'énergie selon la revendication 1, dans lequel la sortie d'air (32) est une ouverture faisant face vers le haut.

3. Système de génération d'énergie selon la revendication 1, dans lequel la sortie d'air (32) est séparée horizontalement d'une limite entre le passage de ventilation (40) et le passage d'évacuation (50).

4. Système de génération d'énergie selon la revendication 1, dans lequel :
le passage de ventilation (40) comporte un passage horizontal (46) à travers lequel l'air s'écoule horizontalement ; et
le passage horizontal (46) présente une section transversale ayant une longueur horizontale plus longue.

5. Système de génération d'énergie selon la revendication 1, dans lequel :
le passage de ventilation (40) comporte une partie de fusion (48, 55) où le gaz d'échappement et l'air fusionnent ; et
la partie de fusion (48, 55) est située en aval de la sortie d'air (32) dans une direction d'écoulement de l'air.

6. Système de génération d'énergie selon la revendication 5, dans lequel :
le passage de ventilation (40) comporte un passage horizontal (46) à travers lequel l'air s'écoule horizontalement ; et
le passage horizontal (46) comporte la partie de fusion (48, 55).

7. Système de génération d'énergie selon la revendication 6, dans lequel un plafond (49) du passage de ventilation (40) comporte :
un premier segment (49a) situé au-dessus de la sortie d'air (32) ;
un deuxième segment (49b) voisin de la partie de fusion (48, 55) ; et
un troisième segment (49c) incliné vers le bas entre le premier segment (49a) et le deuxième segment (49b) dans une direction allant du premier segment (49a) au deuxième segment (49b).

8. Système de génération d'énergie selon la revendication 5, dans lequel
le passage de ventilation (40) comporte un passage horizontal (46) à travers lequel l'air s'écoule horizontalement, et
la sortie d'air (32) est située entre la partie de fusion (48, 55) et la sortie de drainage (60) dans une direction perpendiculaire à une section transversale du passage horizontal (46).

9. Système de génération d'énergie selon la revendication 5, dans lequel le passage de ventilation (40) a, au niveau de la partie de fusion (48, 55), une surface de section transversale qui est supérieure ou égale à une surface d'ouverture de la sortie d'air (32).

10. Système de génération d'énergie selon la revendication 1, dans lequel le ventilateur (30) comporte un dispositif anti-retour (35) adjacent à la sortie d'air (32).

11. Système de génération d'énergie selon la revendication 1, dans lequel l'unité de pile à combustible (10) comporte en outre un processeur de combustible (15) qui produit un combustible gazeux à fournir à la pile à combustible (11).
